(19) Europäisches Patentamt
European Patent Office
Office européen des brevets

(11) **EP 1 884 795 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(21) Anmeldenummer: **07111188.4**

(22) Anmeldetag: **27.06.2007**

(51) Int Cl.:
*G01S 7/292* *(2006.01)*       *G01S 13/532* *(2006.01)*

(54) **Verfahren zur Ortung eines Objekts**

Method for locating an object

Procédé destiné à la localisation d'un objet

(84) Benannte Vertragsstaaten:
**DE FR GB IT**

(30) Priorität: **26.07.2006 DE 102006034518**

(43) Veröffentlichungstag der Anmeldung:
**06.02.2008 Patentblatt 2008/06**

(73) Patentinhaber: **ROBERT BOSCH GMBH**
**70442 Stuttgart (DE)**

(72) Erfinder: **Becker, Jan-Carsten**
**71701 Schwieberdingen (DE)**

(56) Entgegenhaltungen:
WO-A-2006/133268     US-A- 5 416 488
US-A- 5 508 706      US-A- 5 706 013

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ortung eines Objekts, eine Einrichtung zur Ortung eines Objekts, ein Computerprogramm und ein Computerprogrammprodukt

Stand der Technik

Zur Orts- und/oder Geschwindigkeitsbestimmung eines Objekts wird dieses Objekt üblicherweise mittels elektromagnetischer Wellen erfasst. Zur quantitativen Bestimmung des Orts und/oder der Geschwindigkeit werden Sensordaten, die bei Messungen ermittelt werden, ausgewertet. Um ein gutes Messergebnis zu erzielen, ist es u. a. erforderlich, bei der Auswertung Einflüsse von Störungen in geeigneter Weise zu minimieren.

Aus der Druckschrift US 5 508 706 A ist eine Einrichtung zur Verarbeitung von Radarsignalen bekannt. Diese Einrichtung umfasst einen Transceiver, der dazu ausgebildet ist, Radarsignale auszusenden sowie Radarsignale, die von einem Ziel reflektiert werden, zu empfangen. Hierbei werden mit einem Mixer dieser Einrichtung transmittierte und reflektierte Radarsignale zu einem Mixersignal kombiniert. Mit einer Vorrichtung zur Abschätzung eines Spektrums wird ein Entfernungsprofil bereitgestellt, das eine Vielzahl von Entfernungskästchen umfasst, wobei jedes Entfernungskästchen eine Größe einer Spektralkomponente beinhaltet. Mit einer Schwelleneinrichtung, die mit der Vorrichtung zur Abschätzung des Spektrums verbunden ist, wird von einem Signal des Abstandsprofils ein Zielraumgitter bereitgestellt. Eine Vorrichtung, die dazu ausgebildet ist, ein Ziel zu identifizieren, und die mit der Schwellenvorrichtung verbunden ist, erzeugt abgeschätzte Abstands- und Geschwindigkeitssignale für ein nächstes Zielobjekt aus dem Zielraumgitter.

Offenbarung der Erfindung

Bei dem erfindungsgemäßen Verfahren zur Ortung eines Objekts durch Verarbeitung von Sensordaten wird mit den Sensordaten eine gitterbasierte probabilistische Sensordatenfusion durchgeführt. Dabei werden mit den Sensordaten für Zellen eines Raumgitters Belegungswahrscheinlichkeiten sowie über eine Segmentierung ein zusammenhängendes Gebiet mit belegten zellen bestimmt. Das Objekt wird anhand dieses Gebiets geortet.

In Ausgestaltung werden die Belegungswahrscheinlichkeiten durch eine einzelne einfach zu parametrisierende Schwelle bestimmt. Dabei wird eine Zelle als belegt klassifiziert, falls deren Belegungswahrscheinlichkeit größer oder gleich einem Wert der Schwelle ist. Eine Größe des Werts für die Schwelle wird in geeigneter Weise, z. B. sensorspezifisch, definiert.

Des weiteren ist in dieser Ausgestaltung zur Bestimmung des zusammenhängenden Gebiets vorgesehen, dass eine als Keimzelle vorgesehene Zelle mit einer hinreichend großen Belegungswahrscheinlichkeit ermittelt wird und Belegungswahrscheinlichkeiten von Nachbarzellen, die zu dieser Keimzelle benachbart sind, analysiert werden. Nachbarzellen, die ebenfalls hinreichend große Belegungswahrscheinlichkeiten aufweisen, dienen als neue Keimzellen. Das Gebiet wird dabei aus einem Bereich des Raumgitters, das eine Vielzahl benachbarter Zellen mit hinreichender Belegungswahrscheinlichkeit umfasst, zusammengesetzt.

Zur Durchführung des Verfahrens ist üblicherweise vorgesehen, dass ein Sensor, insbesondere Radarsensor, mindestens ein Ziel bspw. mit elektromagnetischen Wellen erfasst. Die daraus bereitgestellten Sensordaten werden eingelesen und abgespeichert. Des weiteren kann ein Leersignalspektrum des Sensors, der die Sensordaten bereitstellt, eingelesen werden. Durch Abziehen dieses Leersignalspektrums von den Sensordaten bzw. einem Spektrum der Sensordaten kann ein Hintergrundrauschen eliminiert werden. Außerdem ist vorgesehen, dass eine Geometrie von Zellen im dv-Raum bzw. im Ort-Geschwindigkeitsraum, der das Raumgitter aufspannt, eingelesen wird. Aus den Sensordaten werden FFT-Spektren extrahiert und in den dv-Raum transformiert, hier ist FFT die Abkürzung für Fast-FourierTransformation bzw. schnelle Fouriertransformation. Die FFT-Spektren sind die in der Signalverarbeitungskette des Radarsensors ersten Signale, auf die digital zugegriffen werden kann. Daher werden üblicherweise FFT-Spektren als Eingangssignale verwendet. Das Verfahren ist jedoch auch mit anderen Signalen, die in der Signalverarbeitungskette später auftreten, durchführbar.

In weiterer Ausgestaltung wird zur Berechnung der Belegungswahrscheinlichkeiten der Zellen mehrmals eine Tracking-Schleife durchlaufen. Dabei ist vorgesehen, dass die Belegungswahrscheinlichkeiten des Gebiets der Zellen von einem vorigen Zyklus der Tracking-Schleife zu einem aktuellen Zyklus prädiziert werden, wobei aktuelle Sensordaten verarbeitet werden. Es werden für jeden Zyklus die Bewegungswahrscheinlichkeit für jede Zelle aus den Sensordaten dieses Zyklus berechnet und zu einer resultierenden Belegungswahrscheinlichkeit akkumuliert bzw. zusammengefasst.

Des weiteren ist es möglich, dass eine statische Abbildungsmatrix berechnet wird, in der für jede FFT-Linie aus dem FFT-Spektrum der Flächenanteil dieser FFT-Linie an jeder Zelle des dv-Raums abgelegt wird. Zudem kann die Belegungswahrscheinlichkeit jeder FFT-Linie mit dem Flächenanteil aus der Abbildungsmatrix gewichtet werden.

Das Verfahren wird typischerweise für Sensordaten, die als Radarspektren von mindestens einem als Radargerät ausgebildeten Sensor bereitgestellt werden, durchgeführt. Das Verfahren ist jedoch auch mit anderen Ortungsverfahren und entsprechenden Sensoren, bei denen Lidar, Ultraschall oder Video genutzt werden, durchführbar. Die Erfindung ist demnach für alle Arten von Fahrerassistenzsysteme, insbesondere für Fahrzeugsicherheitssysteme geeignet. Bei einer Anwendung für Fahrzeugsicherheitssysteme können Nachteile bisher verwendeter Ortungs- und Sensorsignalsicherheitsverfahren behoben werden.

Die erfindungsgemäße Einrichtung zur Ortung eines Objekts ist dazu ausgebildet, Sensordaten durch Ausführung einer gitterbasierten probabilistischen Sensordatenfusion zu verarbeiten, mit den Sensordaten für Zellen eines Raumgitters Belegungswahrscheinlichkeiten zu bestimmen, über eine Segmentierung ein zusammenhängendes Gebiet mit belegten Zellen zu bestimmen und das Objekt anhand dieses Gebiets zu orten.

Diese Einrichtung kann mindestens einen Sensor, bspw. ein Radargerät, zur Bereitstellung der Sensordaten aufweisen oder mit mindestens einem derartigen Sensor zusammenwirken. Außerdem weist diese Einrichtung einen zum Abspeichern der Sensordaten ausgebildeten Speicher sowie eine Recheneinheit auf. Die Einrichtung weist ggf. noch weitere Module auf, so dass sie zur Durchführung sämtlicher Schritte des erfindungsgemäßen Verfahrens geeignet ist.

Zur Realisierung in einer Einrichtung, die in Ausgestaltung als Fahrzeugsteuergerät ausgebildet ist, können zumindest Teile eines Algorithmus, mit dem mindestens ein Schritt eines erfindungsgemäßen Verfahrens durchzuführen ist, in einem derartigen Fahrzeugsteuergerät umgesetzt sein. Somit sind diese Teile des Algorithmus aus Gründen der Rechenzeit nicht ausschließlich als Computerprogramm (Software) sondern direkt in der Einrichtung, insbesondere in Computer-Hardware, bspw. als FPGA, ASIC und dergleichen, umgesetzt.

Die Erfindung betrifft des weiteren ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere in einer erfindungsgemäßen Einrichtung, ausgeführt wird.

Das erfindungsgemäße Computerprogrammprodukt mit Programmcodemitteln, die auf einem computerlesbaren Datenträger gespeichert sind, ist zur Durchführung aller Schritte eines erfindungsgemäßen Verfahrens geeignet, wenn das Computerprogramm auf einem Computer oder einer entsprechenden Recheneinheit, insbesondere in einer erfindungsgemäßen Einrichtung, ausgeführt wird.

Mit der Erfindung ist eine Implementierung einer gitterbasierten probabilistischen Sensordatenfusion möglich. Bislang erfolgten Sensordatenfusionen mit Verfahren, die auf Objektlisten basieren. Mit der vorliegenden Erfindung können Unsicherheiten bei der Objekterkennung und Objektverarbeitung minimiert werden. Die Erfindung ist insbesondere für die Anwendung bei sicherheitskritischen Fahrerassistenzfunktionen geeignet, die nun zufriedenstellend abgebildet werden können.

Ein Vergleich des erfindungsgemäßen Verfahrens gegenüber einer herkömmlichen Signalverarbeitung für Radarsensoren hat gezeigt, dass mit dem neuen Verfahren, insbesondere Objekte unterschiedlicher Größe, unter Ortauflösung und somit voneinander hinreichend getrennt erkannt bzw. detektiert werden können. So war es bei einem Versuch möglich, ein Motorrad hinter einem LKW stabil zu verfolgen, was mit etablierten Verfahren bisher nicht durchgängig möglich war. Außerdem konnte das Motorrad beim Überholen des LKWs auch hinter dem LKW detektiert werden. Das erfindungsgemäße Verfahren kommt ohne Rauschschwellen für die Spektren einzelner Rampen aus, stattdessen kommt eine einzelne, einfach zu parametrierende Schwelle im finalen Schritt des Verfahrens zum Einsatz.

Die gitterbasierte probabilistische Sensordatenfusion ist insbesondere dann zuverlässig anzuwenden, wenn Sensordaten, also Eingangs- bzw. Rohdaten, erschlossen verwendet werden, die möglichst nah an der physikalischen Messung des verwendeten Sensors liegen. Zur Durchführung des Verfahrens werden insbesondere Rohdaten eines Radarsensors benutzt, die typischerweise als FFT-Spektren vorliegenden Rohdaten werden bei Durchführung des Verfahrens fusioniert.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird im folgenden unter Bezugnahme auf die Zeichnung ausführlich beschrieben.

Kurze Beschreibung der Zeichnungen

Figur 1 zeigt ein Diagramm zu einem Ablauf einer Ausführungsform des erfindungsgemäßen Verfahrens.

Figur 2 zeigt eine Ausführungsform einer Algorithmusstruktur zur Durchführung des erfindungsgemäßen Verfahrens.

Figur 3 zeigt eine Ausführungsform einer Zelle im dv-Raum.

Figur 4 zeigt eine Zelle im dv-Raum mit einem prinzipiellen Verlauf von FFT-Linien.

Figur 5 zeigt eine Ausführungsform für eine Scherung im dv-Raum.

Figur 6 zeigt in schematischer Darstellung ein Beispiel zur Implementierung eines Zeit-Updates als zeilendiskrete Scherung.

Figur 7 zeigt eine Ausführungsform zur Segmentierung.

Figur 8 zeigt ein Beispiel für eine entfernungsabhängige Segmentierungsschwelle.

Ausführungsform der Erfindung

Die Figuren werden zusammenhängen und übergreifend beschrieben, gleiche Bezugszeichen bezeichnen gleiche Bauteile.

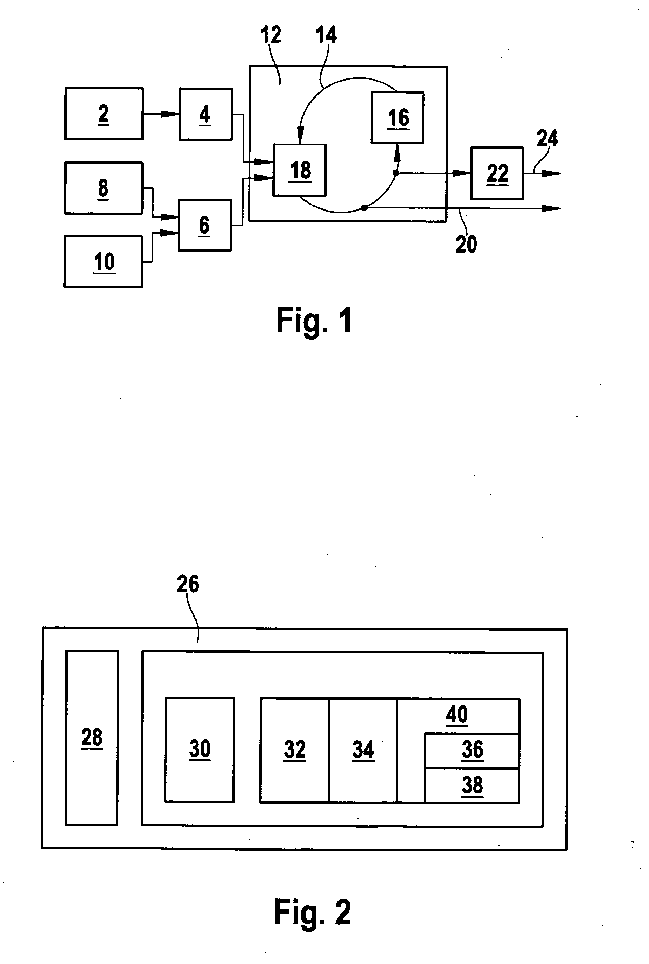

Figur 1 zeigt ein Diagramm zum Ablauf einer Ausführungsform des erfindungsgemäßen Verfahrens. Sensordaten 2, die in dieser Ausführungsform als Radarspektren vorliegen, werden in einem ersten Schritt 4 vom Sensor eingelesen. Zusätzlich wird ein vorab generierter Referenzdatensatz mit einem Leersignalspektrum desselben Sensors eingelesen. In einem zweiten Schritt 6 wird aus Konfigurationsdaten die Geometrie 8 der Zellen im dv-Raum bzw. im Orts-Geschwindigkeitsraum sowie die Geometrie 10 der FFT Spektren, d. h. die Modulationsparameter von Rampen der eingelesenen Sensordaten 2 extrahiert.

Wird die Berechnung gestartet, wird im dv-Raum zyklisch eine Tracking-Schleife 12 durchlaufen. In jedem Zyklus werden zunächst die Belegungswahrscheinlichkeiten 14 eines Gebiets der Zellen von einem vorigen Zyklus in den aktuellen Zyklus durch die erste Funktion 16 zur zeitlichen Prädiktion der Belegungswahrscheinlichkeiten prädiziert. Die aktuellen Messwerte, die vorab in einem Speicher eingelesen wurden, werden durch die zweite Funktion zur Verarbeitung von Sensordaten im Wahrscheinlichkeitsgitter 18 verarbeitet. Es wird für jeden Zyklus die Belegungswahrscheinlichkeit für jede Zelle aus den Sensordaten 2 dieses Zyklus berechnet und zu einer resultierenden Belegungswahrscheinlichkeit 20 akkumuliert. Diese resultierenden Belegungswahrscheinlichkeiten 20 für alle Zellen können bedarfsweise direkt ausgegeben werden. Durch Segmentierung 22 und damit verbundenen Algorithmen werden aus zusammenhängenden Zellen über einer vordefinierten Schwelle Objekte 24 berechnet und ausgegeben.

Figur 2 zeigt eine Ausführungsform einer AlgorithmusStruktur 26 mit den wichtigsten Algorithmus-Modulen zur Durchführung des Verfahrens. Hierbei enthält ein erstes Modul 28 die Konfigurationsparameter, ein zweites Modul 30 liest die zu verarbeitenden Roh- bzw. Sensordaten 2 aus und legt diese in Strukturen ab. Ein drittes Modul 32 initialisiert die benötigten Datenstrukturen. Als algorithmische Module sind hier eine Funktion 34 zur Umrechnung der FFT-Linien in den dv-Raum, ein viertes Modul 36 und ein fünftes Modul 38 vorgesehen. Die Tracking-Schleife 12 wird durch das sechste Modul 40 bereitgestellt. Details zu den einzelnen Modulen 30, 32, 34, 36, 38, 40 werden bei der Beschreibung nachfolgender Figuren beschrieben.

Zunächst wird die Berechnung der Abbildung vom Spektralraum in den dv-Raum beschrieben. Die Funktion 34 zur Umrechnung der FFT-Linien in den dv-Raum ist in dieser Ausführungsform Teil des inversen Sensormodells und zur Transformation der Informationen und somit der Sensordaten aus dem Spektralraum in den dv-Raum ausgebildet. Vor einem Beginn der zyklischen Durchläufe der Tracking-Schleife 12 wird in diesem Modul eine statische Abbildungsmatrix berechnet, in der für jede FFT-Linie der Flächenanteil dieser FFT-Linie an jeder Zelle des dv-Raums abgelegt ist. Im fünften Modul 38 wird dann für die eigentliche Berechnung der Wahrscheinlichkeitsmasse jeder Zelle lediglich die Belegungswahrscheinlichkeit jeder FFT-Linie mit dem vorab berechneten Flächenanteil aus der Abbildungsmatrix gewichtet. Es ist vorgesehen, dass eine Frequenz jedes Sensorsignals 2 mit einer bestimmten Rampensteigung moduliert wird. In der vorliegenden Ausführungsform sind drei Spektren, für die drei Rampen aufgenommen werden, angegeben. Die Abbildungsmatrix wird für jede der drei Rampen und für jeden verwendeten Modulationsmodus getrennt berechnet und abgelegt.

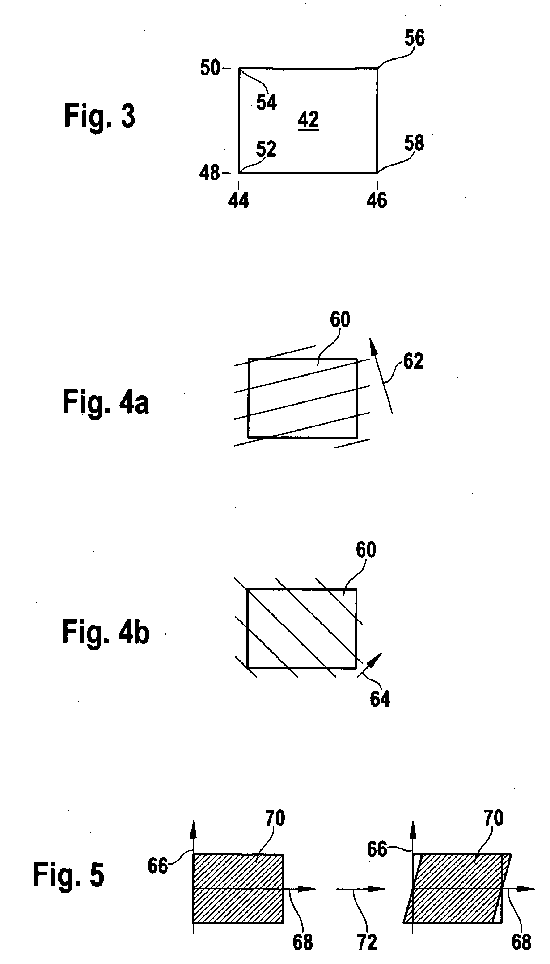

Figur 3 zeigt eine i-te Zelle 42 eines Raumgitters im dv-Raum, wobei i den Index der Zelle bezeichnet. Diese i-te Zelle 42 erstreckt sich in Ortsrichtung zwischen einem minimalen Ortswert $d_i$ 44 und einem maximalen Ortswert $d_i + \Delta d_i$ 46, in Geschwindigkeitsrichtung erstreckt sich die i-te Zelle 42 zwischen einem minimalen Geschwindigkeitswert $v_i$ 48 und einem maximalen Geschwindigkeitswert $v_i + \Delta v_i$ 50. Die Koordinaten des Referenzpunktes für diese i-te Zelle 42 werden somit durch $d_i$ 44 und $v_i$ 48 und die Ausdehnung durch $\Delta d_i$ und $\Delta v_i$ beschrieben. Bei Durchführung des Verfahrens wird für jeden der vier Eckpunkte der i-ten Zelle 42 eine Frequenz $f_A$ 52, $f_B$ 54, $f_C$ 56, $f_D$ 58 berechnet.

Die Frequenz f zu einem Punkt im dv-Raum mit dem Abstand d und der Geschwindigkeit v erhält man durch die FMCW-Gleichung für frequenzmoduliertes kontinuierliches Wellenradar (frequency-modulated continuous wave ra-

dars):

$$f = 2 \cdot \frac{Slope}{c} \cdot d + 2 \cdot \frac{f_0}{c} \cdot v_1 \qquad (1)$$

wobei Slope die bekannte Steigung der jeweiligen Rampe, c die Lichtgeschwindigkeit und $f_0$ die bekannte Trägerfrequenz der jeweiligen Rampe ist.

Man erhält damit für die Frequenzen $f_A$ 52, $f_B$ 54, $f_C$ 56, $f_D$ 58 an den vier Eckpunkten der i-ten Zelle 42 aus Figur 3:

$$f_A = 2 \cdot \frac{Slope}{c} \cdot d_i + 2 \cdot \frac{f_0}{c} \cdot v_i \qquad (2)$$

$$f_B = 2 \cdot \frac{Slope}{c} \cdot d_i + 2 \cdot \frac{f_0}{c} \cdot (v_i + \Delta v_i) \qquad (3)$$

$$f_C = 2 \cdot \frac{Slope}{c} \cdot (d_i + \Delta d_i) + 2 \cdot \frac{f_0}{c} \cdot (v_i + \Delta v_i) \qquad (4)$$

$$f_D = 2 \cdot \frac{Slope}{c} \cdot (d_i + \Delta d_i) + 2 \cdot \frac{f_0}{c} \cdot v_i \qquad (5)$$

Aus diesen vier Frequenzen $f_A$ 52, $f_B$ 54, $f_C$ 56, $f_D$ 58 werden unmittelbar die niedrigste und die höchste Frequenz $f_{min\,Cell}$ bzw. $f_{max\,Cell}$ bestimmt, die in der betrachteten i-ten Zelle 42 vorkommen:

$$f_{min\,Cell} = \min(f_A, f_B, f_C, f_D) \qquad (6)$$

$$f_{max\,Cell} = \max(f_A, f_B, f_C, f_D) \qquad (7)$$

Die Figuren 4a und 4b zeigen jeweils eine Zelle 60 im dv-Raum, sowie eine Lage von FFT-Linien 62, 64 relativ zu dieser Zelle 60 und somit den prinzipiellen Verlauf dieser FFT-Linien 62, 64. Die Lage der FFT-Linien 62, 64 ist von der Steigung der Rampen abhängig. Mit dem einen Rampen-Parameter FFTStep, der den aus Modulationsparametern des Sensors bekannten Abstand zwischen zwei FFT-Linien bezeichnet, wird zu jeder Frequenz der Index der FFT-Linie mit der nächst höheren Frequenz bestimmt:

$$idxFFTline\_\min = ceil(fMinCell\,/\,FFTStep) \qquad (8)$$

$$idxFFTline\_\max = ceil(fMaxCell\,/\,FFTStep) \qquad (9)$$

Mit den Formeln (8) und (9) erhält man den Index derjenigen FFT-Linie 62, 64, in deren Bereich die jeweils höchste bzw. niedrigste Frequenz liegt. Die derart errechneten Frequenzen der FFT-Linien 62, 64 sind mit Vorzeichen behaftet, daher kann der Index einer FFT-Linie 62, 64 sowohl positiv als auch negativ sein. Allerdings können im Amplitudenspektrum positive und negative Frequenzen nicht voneinander unterschieden werden, dies bedeutet, dass eine Amplitude im Spektrum sowohl von einer positiven als auch von einer negativen Frequenz verursacht werden kann. Hierzu werden die negativen Frequenzen der FFT-Linien 62, 64 in den positiven Bereich des Amplitudenspektrums übertragen.

Zur Realisierung des Verfahrens ist des weiteren vorgesehen, den Flächenanteil der jeweiligen FFT-Linien 62, 64 an der untersuchten Zelle 60 zu berechnen. Hierzu wird für jede in Frage kommende FFT-Linie 62, 64, im vorliegenden Ausführungsbeispiel innerhalb des Intervalls zwischen idxFFTline_min und idxFFTline_max, die obere und untere Grenzfrequenz berechnet. Diese beiden Grenzfrequenzen begrenzen jenen Bereich, der durch die FFT-Linie 62, 64 beschrieben wird. Hierbei handelt es sich um die Frequenz $f_2$ der FFT-Linie 62, 64 und die Frequenz $f_1$ der nächst kleineren FFT-Linie 62, 64:

$$f_1 = (idxFFTline - 1.0) \cdot FFTStep \qquad (10)$$

$$f_2 = (idxFFTline) \cdot FFTStep \qquad (11)$$

Für die positiven und negativen Rampensteigungen existieren achtzehn verschiedene Schnittvarianten, auf die sich das Frequenzband zwischen $f_1$ und $f_2$ und die Fläche einer Zelle 60 überlappen können. Für jede mögliche Schnittvariante ist eine Vorschrift für die Berechnung des Flächenanteils der jeweiligen FFT Linie 62, 64 an der Zelle 60 in Abhängigkeit der Parameter d, $\Delta$d, v, $\Delta$v, $f_1$ und $f_2$ gegeben. Diese Parameter sind bereits vor der Laufzeit bekannt und beschreiben das Gebiet der Zelle sowie die Lage der FFT-Linien 62, 64 in diesem Gebiet vollständig.

Bei den Durchläufen der in Figur 1 vorgestellten Tracking-Schleife 12 laufen über alle drei Rampen und alle Modulationsvarianten sowie für jede Rampe über alle Zellen 42, 60 des dv-Raums verschachtelte Schleifen. Für jede Zelle 42, 60 werden die Eckfrequenzen $f_A$ 52, $f_B$ 54, $f_C$ 56, $f_D$ 58 berechnet und danach nach den FFT-Linien 62, 64 gesucht, die einen Flächenanteil an der jeweiligen Zelle 42, 60 im dv-Raum haben. Diese FFT-Linien 62, 64 werden mit den Gleichungen (8) und (9) ermittelt. Über diese FFT-Linien 62, 64 läuft nun wiederum eine Schleife. Für jede FFT-Linie dieser Schleife wird mit den Gleichungen (10) und (11) die obere und untere Grenzfrequenz $f_1$ bzw. $f_2$ berechnet. Durch diese Schritte des Verfahrens werden die Parameter $f_A$ 52, $f_B$ 54, $f_C$ 56, $f_D$ 58 der Zelle 42, 60 und die Parameter $f_1$, $f_2$ der FFT-Linie 42, 60 bereitgestellt. Dabei wird zwischen den achtzehn verschiedenen Schnittvarianten unterschieden. Der für jede Schnittvariante berechnete Flächenanteil wurde vorab in Matrixform in einem Speicher abgelegt.

In der Matrix sind nur diejenigen FFT-Linien 62, 64 abgelegt, die einen Flächenanteil an der Zelle 42, 60 haben, zuzüglich des Indexes der ersten Linie, die einen Flächenanteil an der Zelle 42, 60 hat. Diese Vereinfachung ist möglich, da die FFT-Linien 62, 64 , die einen Flächenanteil an der Zelle 42, 60 haben, grundsätzlich in einem zusammenhängenden Bereich liegen, dadurch wird die Matrix ungefähr um den Faktor 100 gegenüber der vollständigen Matrix verkleinert. Bei der Berechnung läuft diese Matrix zudem nicht über alle FFT-Linien 62, 64, womit Speicher- und Rechenzeit eingespart wird.

Das fünfte Modul 38 (Figur 2) umfasst das Radarsensormodell. Mit dem fünften Modul 38 wird, basierend auf den Messungen des aktuellen Zyklus, die Wahrscheinlichkeitsmasse für die Belegung einer Zelle 42, 60 berechnet.

Bei der Berechnung der Belegungswahrscheinlichkeiten der Zellen 42, 60 ist vorgesehen, die Wahrscheinlichkeit dafür zu berechnen, dass die Amplitude einer FFT-Linie 62, 64 von einem echten Ziel und somit Objekt stammt, so dass es sich bei der Amplitude nicht um ein Rauschen handelt.

Idealerweise wird der Amplitude einer FFT-Linie 62, 64, die sicher vom Rauschen des Sensor stammt, eine Belegungswahrscheinlichkeit von Null zugeordnet. Einer Amplitude einer FFT-Linie 62, 64, die sicher von einem realen Ziel stammt, wird die Belegungswahrscheinlichkeit Eins zugeordnet. Eine derartige deterministische Bestimmung der Belegungswahrscheinlichkeiten ist typischerweise nicht möglich. Aus realen Anwendungen ist bekannt, dass das Rauschen des Sensors stochastisches Verhalten aufzeigt. Für dieses Verhalten wird ein stochastisches Modell aufgestellt. Für das Rauschmodell ist bekannt, dass Real- und Imaginärteil des Rauschens normalverteilt, mittelwertfrei und voneinander unabhängig sind. Daraus ergibt sich die Wahrscheinlichkeit, dass eine Messung mit der Amplitude $A_{Signal}$ nicht vom Rauschen sondern von einem realen Ziel stammt:

$$P(line) = P(A_{Signal} > A) = \int_0^{A_{Signal}} \rho_A(A)\,dA$$

$$= \int_0^{A_{Signal}} \frac{A}{\sigma^2} e^{-\frac{A2}{2\sigma^2}}\,dA$$

$$= \left[ -e^{-\frac{A^2}{2\sigma^2}} \right]_0^{A_{Signal}} \tag{12}$$

$$= 1 - e^{-\frac{A^2_{Signal}}{2\sigma^2}}$$

$$= 1 - e^{-\frac{P_{Signal}}{P_{Noise}}}$$

dabei ist $P_{Signal} = A^2_{Signal}$ die Signalleistung und $P_{Noise} = 2\,\sigma^2$ die mittlere Rauschleistung.

Diese Wahrscheinlichkeit (12) wird nun als Belegungswahrscheinlichkeit der FFT-Linie 62, 64 bezeichnet.

Bei Durchführung des Verfahrens wird in jedem Rechenzyklus der Tracking-Schleife 12 (Figur 1) für jede FFT-Linie 62, 64 aller drei Rampen die Belegungswahrscheinlichkeit der FFT-Linie 62, 64 nach Gleichung (12) berechnet und gespeichert. Die hierfür benötigte mittlere Rauschleistung wird vorab durch Aufnahme einer Leersignal-Langzeitmessung, wobei eine Messung mit abgedecktem Sensor erfolgt, für den verwendeten Sensor ermittelt. Die Rauschleistung wird für jeden Modulationsmodus, jede Rampe, jeden Strahl (Beam) des Sensors und jede FFT-Linie 62, 64 getrennt abgelegt.

Für jede Zelle 42, 60 im dv-Raum läuft eine Tracking-Schleife 12 über jene FFT-Linien 62, 64, die einen Flächenanteil an der Zelle 42, 60 besitzen, also innerhalb des Intervall von idxFFTline_min bis idxFFTline_max. Diese Information wird vor einem Start der Tracking-Schleife 12 in der Funktion 34 berechnet und ist in einer Matrix abgelegt.

Die Wahrscheinlichkeitsmasse, die eine FFT-Linie 62, 64 zu einer Zelle 42, 60 beiträgt, wird dadurch berechnet, dass die Belegungswahrscheinlichkeit der FFT-Linie 62, 64 mit dem Flächenanteil der jeweiligen FFT-Linie 62, 64 an der Zelle 42, 60 gewichtet und somit multipliziert wird:

$$P(line, dIdx) = P(line) \cdot \frac{A(line, dIdx, vIdx)}{A(dIdx, vIdx)} \tag{13}$$

Die Wahrscheinlichkeitsmasse der Zelle 42, 60 mit den Indizes dIdx, vIdx berechnet sich somit durch:

$$P_{Cell} = \sum_{all\ lines} P(line, dIdx, vIdx)$$

$$= \sum_{all\ line} P(line) \cdot \frac{A(line, dIdx, vIdx)}{A(dIdx, vIdx)} \tag{14}$$

hierbei ergibt $\Sigma_{all\ lines} A(line, dIdx, vIdx) = A(dIdx, vIdx)$. Die Summe läuft über alle beitragenden FFT-Linien 62, 64, also von idxFFTline min bis idxFFTline max.

Da die Berechnung der Flächenanteile vor dem Start der Tracking-Schleife 12 durchgeführt wird, wird die Berechnung der Wahrscheinlichkeitsmasse effizient implementiert.

Die zeitliche Prädiktion der Verteilung der Wahrscheinlichkeitsmassen im dv-Raum von einem vorigen Zeitschritt in den aktuellen Zeitschritt wird im vierten Modul 36 berechnet.

Zur Durchführung ist das Time-Update ist in dem Algorithmus in zwei Schritten implementiert:

    1. Zunächst erfolgt die Vorhersage bzw. Prädiktion des Gebiets der Zelle 42, 60 im dv-Raum in dem jeweils aktuellen Zeitschritt durch ein sog. Beschleunigungs-Null-Dynamikmodell.

2. Dann wird die Modellunsicherheit der Prädiktion durch Faltung des Gebiets der Zelle 42, 60 mit der Normalverteilung N (0, Q (k-1)) berücksichtigt.

Figur 5 zeigt ein Beispiel einer Scherung des Ortsrichtung d 66 und Geschwindigkeitsrichtung v 68 aufgespannten dv-Raums 70. Eine derartige Scherung des dv-Raums 70 um die v = 0-Achse entlang der Geschwindigkeitsrichtung 68 entspricht eine Prädiktion in die Zukunft. Bei Durchführung des Verfahrens erfolgt die Scherung zeilenweise, da die Inhalte aller Zellen einer Zeile um die gleiche Distanz (72) $dShift_{val} = \Delta T(k\text{-}1)v(k\text{-}1)$ verschoben werden.

Die Wahrscheinlichkeitsmasse jeder Zelle der Zeile des Zeitschritts (k-1) wird also um

$$dShift_{idx} = dShift_{val} / \Delta d \qquad (15)$$

Zellenbreiten $\Delta d$ verschoben in das Zellgebiet des Zeitschritts k übertragen. Der Wert $dShift_{idx}$ nimmt in der Regel keine ganzzahligen Werte an, so dass die Wahrscheinlichkeitsmasse der Ursprungszelle gemäß der Flächenanteile in zwei benachbarte Zellen verschoben wird:

$$factorLowerCell = ceil(dShift_{Idx}) - dShift_{Idx}$$
$$factorUpperCell = 1.0 - factorLowerCell \qquad (16)$$

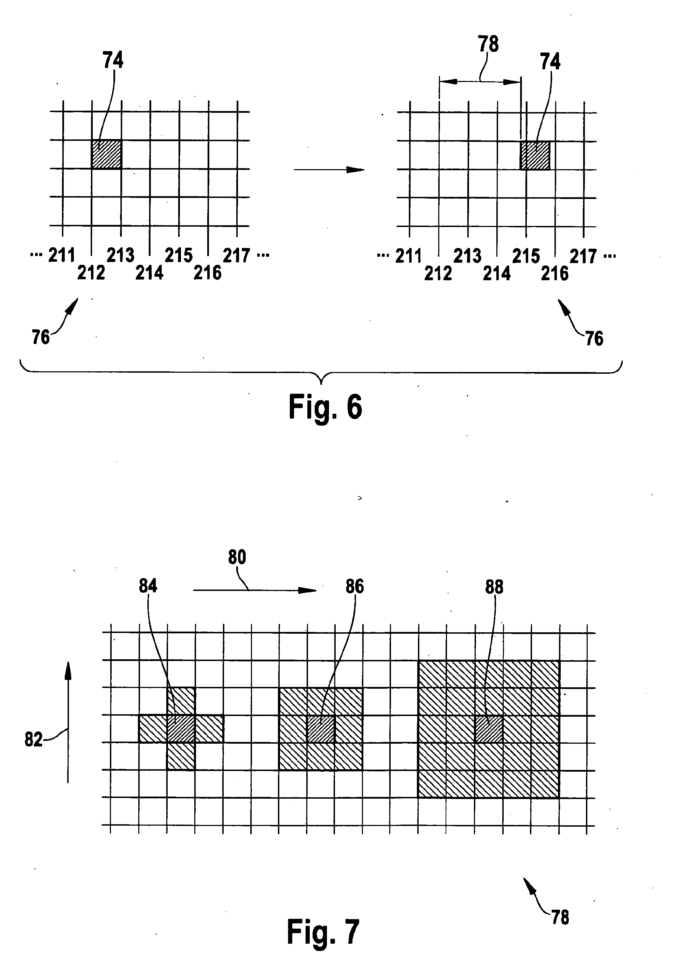

Figur 6 zeigt ein Beispiel zur Verschiebung einer hier grau schattierten Zelle 74 im dv-Raum 76

Es sei $\Delta T (k\text{-}1) = 0{,}1$ s und v = 28 m/s, somit ergibt sich:

$$dShift_{val} = 0.1s \cdot 28m/s = 2.8m \qquad (17)$$

Mit $\Delta d = 1$ m folgt eine Verschiebung 78 um:

$$dShift_{idx} = 2.8m/1m = 2.8 \qquad (18)$$

Zellenbreiten. Des weiteren ergibt sich:

$$factorLowerCell = ceil(2.8) - 2.8 = 3.0 - 2.8 = 0.2$$
$$factorUpperCell = 1.0 - 0.2 = 0.8 \qquad (19)$$

Einzelne Gitterzellen des dv-Raum 76 sind in Figur 6 in Ortsrichtung d mit Indizes 211 bis 217 versehen. Demnach wird hier die Zelle 74 aus dem Index 212 des Zeitschritts k-1 in die Gitterzellen mit den Indizes 214 und 215 des Zeitschritts k übertragen:

$$P_{214}(k) = 0{,}2 \ P_{212}(k\text{-}1)$$
$$P_{215}(k) = 0{,}8 \ P_{212}(k\text{-}1) \qquad (20)$$

In einem nachfolgenden Schritt des Zeit- bzw. Time-Updates wird die Prädiktionsunsicherheit des Dynamikmodells durch Faltung des prädizierten Zellgebiets mit der Normalverteilung N (0, Q(k-1)) berücksichtigt.

$$Q(k-1) = diag\left(\sigma_d^2, \sigma_v^2\right) \tag{21}$$

wobei

$$\sigma_d = 0.5 \cdot \Delta T^2 \cdot a\_\max_{Objekt}$$
$$\sigma_v = \Delta T \cdot a\_\max_{Objekt} \tag{22}$$

hierbei ist a max$_{Objekt}$ die angenommene maximale Objektbeschleunigung.

Somit ergibt sich für die typische Zykluszeit $\Delta t$ = 0,1 s und mit einer beispielhaft angenommenen maximalen Objektbeschleunigung a_max$_{Objekt}$ = 20 m/s$^2$.

$$\sigma_d = 0.5 \cdot (0.1s)^2 \cdot 20m/s^2 = 0.1m$$
$$\sigma_v = (0.1s) \cdot 20m/s^2 = 2m/s \tag{23}$$

Bei einer typischen Zellgröße von bspw. $\Delta d$ = 1m und $\Delta v$ = 0.25m/s reduziert sich die zweidimensionale Normalverteilung näherungsweise auf eine eindimensionale Normalverteilung, wodurch sich der Rechenaufwand der Faltung nochmal deutlich verringert.

Die Segmentierung 22 aus Figur 1 erfüllt folgende Aufgaben:

1. Klassifikation einzelner Zellen als belegt oder nicht belegt.
2. Auffinden von Gebieten zusammenhängender belegter Zellen.
3. Eine kompakte Beschreibung der zusammenhängenden Zellgebiete als Objekte.

Zur Objektgenerierung werden im dv-Raum belegte Zellregionen bzw. zusammenhängende Gebiete belegter Zellen identifiziert und zu Objekten verknüpft. Obwohl bei Durchführung des Verfahrens im eigentlichen Sinne kein Bild vorliegt, wird das Zellgebiet als digitalisiertes Bild interpretiert. Jede Zelle ist dabei als Pixel zu betrachten, dessen Grauwert durch die Wahrscheinlichkeitsmasse der Zelle gegeben ist. Mit dieser Analogie entspricht das Auffinden zusammenhängender Zellen und somit zusammenhängender Bildbereiche der Segmentierung 22 im Sinne der Bildverarbeitung.

Bei Durchführung der Segmentierung 22 für die gitterbasierte probabilistische Sensordatenfusion erfolgt eine Schwellwertbildung. Mit dieser Schwellwertbildung werden einzelne Zellen als belegt oder nicht belegt klassifiziert. Anhand einer definierten Schwelle $\varepsilon$ wird die Zelle gemäß ihrer Wahrscheinlichkeitsmasse für P > $\varepsilon$ als belegt oder für P < $\varepsilon$ als nicht belegt klassifiziert. Bei der Segmentierung 22 werden nur Zellen, die als belegt klassifiziert sind, bei der Objektbildung berücksichtigt.

Figur 7 zeigt ein Beispiel zur Bestimmung belegter Zellen im dv-Raum 78. Hier sind die einzelnen Zellen in Ortsrichtung 80 und in Geschwindigkeitsrichtung 82 angeordnet. Zum Auffinden von Gebieten zusammenhängender belegter Zellen wird in der vorliegenden Ausführungsform der sog. Region-Growing-Algorithmus verwendet. Das Zellgebiet wird dabei im dv-Raum 78 systematisch zeilenweise und somit in Ortsrichtung 80 sowie spaltenweise und somit in Geschwindigkeitsrichtung 82 durchsucht. Die erste Zelle, die das Schwellwertkriterium P > E erfüllt, dient als Keimzelle. Nachfolgend werden alle mit dieser Zelle zusammenhängenden Nachbarzellen mit P > $\varepsilon$ gesucht. Gefundene Nachbarzellen, die das Schwellwertkriterium erfüllen, dienen wiederum als Keimzellen für weitere Suchen. Der Vorgang wiederholt sich so lange bis alle mit der Keimzelle zusammenhängenden Zellen gefunden wurden. Diese Zellen werden einem Objekt zugeordnet. Danach wird das Zellgebiet weiter durchsucht bis eine weitere Keimzelle gefunden wird oder alle Zellen des Zellgebiets bei der Suche durchlaufen werden.

Zur Umsetzung sind verschiedene Verfahren bekannt: die Überprüfung der Nachbarzellen einer ersten Zelle 84 erfolgt dabei in der sogenannten Vierer-Nachbarschaft, wobei nur die horizontal und vertikal angrenzenden Zellen berücksichtigt werden. In einer Achter-Nachbarschaft um eine zweite Zelle 86 werden zusätzlich noch die diagonal liegenden Zellen betrachtet. Die Betrachtung der Nachbarzellen der Vierer-Nachbarschaft genügt, um alle direkt zusammenhängenden Zellen zu finden, da eine von der betrachteten ersten 84 Zelle aus diagonal liegende Zelle eine Nachbarzelle einer Zelle der Vierer-Nachbarschaft der betrachteten Zelle 84 ist.

Zur Beschreibung der zusammenhängenden Zellgebiete werden umschreibende achsenparallele Rechtecke, umschreibende flächenminimale Rechtecke, umschreibende ausgerichtete Rechtecke sowie konvexe Hüllen als Beschreibungsform für zusammenhängende Zellgebiete untersucht. Hierbei hat sich u.a. die Verwendung von konvexen Hüllen als zweckmäßig herausgestellt. Diese Beschreibungsform enthält alle wesentlichen Informationen und kann einfach weiter verdichtet werden. Die Entscheidung für die konvexe Hülle oder eine einfachere Beschreibungsform hängt letztendlich allerdings von den Anforderungen der Folgeapplikation an die Objektbeschreibung ab.

Bei einer konvexen Hülle handelt es sich um eine umschreibende Hülle, die neben den zum Objekt gehörenden Zellen auch jede Verbindungslinie zwischen zwei beliebigen Zellen einschließt, somit kann die konvexe Hülle in einer Richtung umfahren, ohne die Drehrichtung zu ändern. Im Vergleich zu umschreibenden Rechtecken stellt die konvexe Hülle eine genauere, das heißt flächenmäßig optimalere Beschreibungsform dar. Für die Berechnung konvexer Hüllen aus Punktmengen sind unterschiedliche effiziente Algorithmen verfügbar.

Um eine Datenausgabe zu erreichen, die mit den Ortungen des Sensors vergleichbar ist, wird in der vorliegenden Ausführungsform jedoch auf die Ausgabe von konvexen Hüllen oder anderen geometrisch komplexeren Beschreibungsformen verzichtet. Stattdessen werden nach der Schwellwertbildung alle lokalen Maxima im Zellgebiet gesucht und ausgegeben. Diese lokalen Maxima sind mit den Ortungen aus der Radarsensor-Serien-Signalverarbeitung vergleichbar. Um zu vermeiden, dass sich mehrere dicht benachbarte Maxima bilden, wird statt der üblichen Vierer- oder Achter-Nachbarschaft hier die Vierundzwanziger-Nachbarschaft, die in Figur 7 um eine dritte Zelle 88 dargestellt ist, für jede Zelle im dv-Raum überprüft, d. h. eine Zelle stellt dann ein Maximum dar, wenn ihr Schwellwert ε größer die Schwellwerte E jeder nächsten und übernächsten benachbarten Zelle ist.

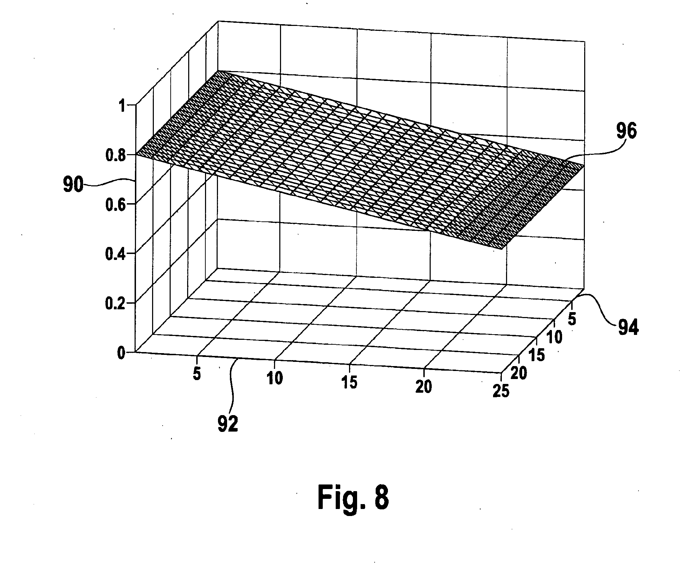

Figur 8 zeigt ein sich in die drei Raumrichtungen 90, 92, 94 erstreckendes Diagramm, in dem ein entfernungsabhängiger Schwellwert 96 für die Segmentierung dargestellt ist. Mit diesem ortsabhängigen Schwellwert 96 wird berücksichtigt, dass bei einer Erfassung durch den Sensor Detektionen von Objekten, die weiter entfernt sind, typischerweise eine niedrigere Rückstreuamplitude ergeben, was wiederum in einer niedrigeren Wahrscheinlichkeitsmasse für die Belegung weiter entfernter Zellen gegenüber näherer Zellen resultiert. Daher wird bei dieser Ausführungsform der Schwellwert 96 entfernungsabhängig implementiert, d.h. für weiter entfernte Zellen wird ein niedrigerer Schwellwert 96 als für nahe Zellen angesetzt.

## Patentansprüche

1. Verfahren zur Ortung eines Objekts (24) durch Verarbeitung von Sensordaten (2) von mindestens einem Sensor für ein Ortungsverfahren, bei dem mit den Sensordaten (2) eine gitterbasierte probabilistische Sensordatenfusion durchgeführt wird, wobei mit den Sensordaten (2) für die Zellen (42, 60, 74, 84, 86, 88) eines Raumgitters Belegungswahrscheinlichkeiten (14, 20) bestimmt werden und über eine Segmentierung (22) ein zusammenhängendes Gebiet mit belegten Zellen (42, 60, 74, 84, 86, 88) bestimmt und das Objekt (24) anhand dieses Gebiets geortet wird, bei dem die Sensordaten (2) eingelesen und abgespeichert werden, bei dem ein Leersignalspektrum eines Sensors, der die Sensordaten (2) bereitstellt, eingelesen wird, bei dem eine Geometrie (8) von Zellen (42, 60, 74, 84, 86, 88) im Art - Geschwindigkeitsraum eingelesen wird, bei dem aus den Sensordaten (2) Fast-Fourier-Transformations-Spektren extrahiert werden, und bei dem die Fast-Fourier-Transformations-Spektren in den Art - Geschwindigkeitsraum (70, 76, 78) transformiert werden, **dadurch gekennzeichnet, dass** eine statische Abbildungsmatrix berechnet wird, in der für jede Fast-Fourier-Transformations-Linie (62, 64) aus dem Fast-Fourier-Transformations-Spektrum der Flächenanteil dieser Fast-Fourier-Transformations-Linie (62, 64) an jeder Zelle (42, 60, 74, 84, 86, 88) des Art - Geschwindigkeitsraums (70, 76, 78) abgelegt wird.

2. Verfahren nach Anspruch 1, bei dem die Belegungswahrscheinlichkeiten (14, 20) durch eine einzelne, definierte Schwelle bestimmt werden, wobei eine Zelle (42, 60, 74, 84, 86, 88) als belegt klassifiziert wird, falls deren Belegungswahrscheinlichkeit (14, 20) größer oder gleich einem Wert der Schwelle ist.

3. Verfahren nach einem der voranstehenden Ansprüche, bei dem zur Bestimmung des zusammenhängenden Gebiets mindestens eine als Keimzelle vorgesehenen Zelle (42, 60, 74, 84, 86, 88), die ein Schwellwertkriterium erfüllt, ermittelt wird und Belegungswahrscheinlichkeiten (14, 20) von Nachbarzellen, die zu dieser Keimzelle benachbart sind, analysiert werden.

4. Verfahren nach einem der voranstehenden Ansprüche, bei dem zur Berechnung der Belegungswahrscheinlichkeiten (14, 20) der Zellen (42, 60, 74, 84, 86, 88) eine Tracking-Schleife (12) mit mehreren Zyklen durchlaufen wird, wobei die Belegungswahrscheinlichkeiten (14, 20) des Gebiets der Zellen (42, 60, 74, 84, 86, 88) von einem vorigen Zyklus in einen aktuellen Zyklus prädiziert werden, wobei aktuelle Sensordaten (2) verarbeitet werden, wobei für jeden Zyklus die Belegungswahrscheinlichkeit (14, 20) für jede Zelle aus den Sensordaten (2) dieses Zyklus berechnet und zu einer resultierenden Belegungswahrscheinlichkeit (14, 20) akkumuliert wird.

5. Verfahren nach Anspruch 1, bei dem die Belegungswahrscheinlichkeit (14, 20) jeder Fast-Fourier-Transformations-Linie (62, 64) mit dem Flächenanteil aus der Abbildungsmatrix gewichtet wird.

6. Verfahren nach einem der voranstehenden Ansprüche, das für Sensordaten (2), die als Radarspektren von mindestens einem als Radargerät ausgebildeten Sensor bereitgestellt werden, durchgeführt wird.

7. Einrichtung zur Ortung eines Objekts (24), die dazu ausgebildet ist, Sensordaten (2) durch Ausführung einer gitterbasierten probabilistischen Sensordatenfusion zu verarbeiten, mit den Sensordaten (2) für Zellen (42, 60, 74, 84, 86, 88) eines Raumgitters Belegungswahrscheinlichkeiten (14, 20) zu bestimmen, über eine Segmentierung ein zusammenhängendes Gebiet mit belegten Zellen (42, 60, 74, 84, 86, 88) zu bestimmen und das Objekt (24) anhand dieses Gebiets zu orten, wobei in der Einrichtung zumindest ein Teil eines zur Durchführung eines Verfahrens nach einem der Ansprüche 1 bis 8 geeigneten Algorithmus umgesetzt ist.

8. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung nach Anspruch 7, ausgeführt wird.

9. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Einrichtung nach Anspruch 7, ausgeführt wird.

**Claims**

1. Method for locating an object (24) by processing sensor data (2) from at least one sensor for a locating method, in the case of which a grid-based probabilistic sensor data fusion is carried out with the sensor data (2), the sensor data (2) of the cells (42, 60, 74, 84, 86, 88) of a spatial grid being used to determine occupancy probabilities (14, 20), and a continuous zone with occupied cells (42, 60, 74, 84, 86, 88) being determined via a segmentation (22), and the object (24) being located with the aid of this zone, in which the sensor data (2) are entered and stored, in which an empty signal spectrum of a sensor which provides the sensor data (2) is entered, in which a geometry (8) of cells (42, 60, 74, 84, 86, 88) in the space-velocity domain is entered, in which fast Fourier transform spectra are extracted from the sensor data (2), and in which the fast Fourier transform spectra are transformed into the space-velocity domain (70, 76, 78), **characterized in that** a static imaging matrix is calculated in which for each fast Fourier transform line (62, 64) form the fast Fourier transform spectrum the area fraction of this fast Fourier transform line (62, 64) at each cell (42, 60, 74, 84, 86, 88) of the space-velocity domain (70, 76, 78) is stored.

2. Method according to Claim 1, in which the occupancy probabilities (14, 20) are determined by a single, defined threshold, a cell (42, 60, 74, 84, 86, 88) being classified as occupied if its occupancy probability (14, 20) is greater than or equal to a value of the threshold.

3. Method according to one of the preceding claims, in which in order to determine the continuous zone at least one cell (42, 60, 74, 84, 86, 88) which is provided as germ cell and fulfils a threshold value criterion is determined, and occupancy probabilities (14, 20) of adjacent cells which are adjacent to this germ cell are analysed.

4. Method according to one of the preceding claims, in which a tracking loop (12) with a number of cycles is traversed in order to calculate the occupancy probabilities (14, 20) of the cells (42, 60, 74, 84, 86, 88), the occupancy probabilities (14, 20) of the zone of the cells (42, 60, 74, 84, 86, 88) of a previous cycle being predicted in a current cycle, current sensor data (2) being processed, for each cycle the occupancy probability (14, 20) for each cell being calculated from the sensor data (2) of this cycle and being accumulated to form a resulting occupancy probability (14, 20).

5. Method according to Claim 1, in which the occupancy probability (14, 20) of each fast Fourier transform line (62, 64) is weighted with the area fraction from the imaging matrix.

**6.** Method according to one of the preceding claims which is carried out for sensor data (2) which are provided as radar spectra by at least one sensor designed as a radar device.

**7.** Device for locating an object (24) which is designed for the purpose of processing sensor data (2) by executing a grid-based probabilistic sensor data fusion, to use the sensor data (2) for cells (42, 60, 74, 84, 86, 88) of a spatial grid to determine occupancy probabilities (14, 20), to determine a continuous zone with occupied cells (42, 60, 74, 84, 86, 88) via a segmentation, and to locate the object (24) with the aid of this zone, at least a part of an algorithm suitable for carrying out a method according to one of Claims 1 to 8 being performed in the device.

**8.** Computer program with program code means for the purpose of carrying out all the steps of a method according to one of Claims 1 to 6 when the computer program is executed on a computer or an appropriate arithmetic logic unit, in particular in a device according to Claim 7.

**9.** Computer program product with program code means, which are stored on a computer-readable data medium, for the purpose of carrying out all the steps of a method according to one of Claims 1 to 6 when the computer program is executed on a computer or an appropriate arithmetic logic unit, in particular in a device according to Claim 7.

**Revendications**

**1.** Procédé de repérage d'un obj et (24) par traitement des données de capteur (2) d'au moins un capteur pour un procédé de repérage, selon lequel une fusion probabiliste des données de capteur basée sur une grille est effectuée avec les données de capteur (2), des probabilités d'occupation (14, 20) des cellules (42, 60, 74, 84, 86, 88) d'une grille dans l'espace étant déterminées avec les données de capteur (2) et une région contiguë avec des cellules (42, 60, 74, 84, 86, 88) occupées étant déterminée par le biais d'une segmentation (22) et l'objet (24) étant repéré au moyen de cette région, selon lequel les données de capteur (2) sont lues et mémorisées, selon lequel un spectre de signal vide d'un capteur qui fournit les données de capteur (2) est lu, selon lequel une géométrie (8) des cellules (42, 60, 74, 84, 86, 88) est lue dans l'espace lieu/vitesse, selon lequel des spectres sont extraits des données de capteur (2) par transformation de Fourier rapide, et selon lequel les spectres de transformation de Fourier rapide sont transformés dans l'espace lieu/vitesse (70, 76, 78), **caractérisé en ce qu'**une matrice de représentation statique est calculée, dans laquelle, pour chaque ligne de la transformation de Fourier rapide (62, 64) du spectre de transformation de Fourier rapide, la part de surface de cette ligne de la transformation de Fourier rapide (62, 64) est enregistrée dans chaque cellule (42, 60, 74, 84, 86, 88) de l'espace lieu/vitesse (70, 76, 78).

**2.** Procédé selon la revendication 1, selon lequel les probabilités d'occupation (14, 20) sont déterminées par un seuil individuel défini, une cellule (42, 60, 74, 84, 86, 88) étant classifiée occupée si sa probabilité d'occupation (14, 20) est supérieure ou égale à la valeur de seuil.

**3.** Procédé selon l'une des revendications précédentes, selon lequel la détermination de la région contiguë s'effectue en définissant au moins une cellule (42, 60, 74, 84, 86, 88) prévue comme cellule primitive, qui remplit un critère de valeur de seuil et en analysant les probabilités d'occupation (14, 20) des cellules voisines qui sont adjacentes à cette cellule primitive.

**4.** Procédé selon l'une des revendications précédentes, selon lequel le calcul des probabilités d'occupation (14, 20) des cellules (42, 60, 74, 84, 86, 88) est effectué en accomplissant une boucle de suivi (12) à plusieurs cycles, les probabilités d'occupation (14, 20) de la région des cellules (42, 60, 74, 84, 86, 88) d'un cycle précédent dans un cycle actuel étant prédites, les données de capteur (2) actuelles étant traitées, la probabilité d'occupation (14, 20) étant calculée pour chaque cycle pour chaque cellule à partir des données de capteur (2) de ce cycle et cumulée en une probabilités d'occupation (14, 20) résultante.

**5.** Procédé selon la revendication 1, selon lequel la probabilité d'occupation (14, 20) de chaque ligne de la transformation de Fourier rapide (62, 64) est pondérée avec la part de surface issue de la matrice de représentation.

**6.** Procédé selon l'une des revendications précédentes, selon lequel il est exécuté pour les données de capteur (2) fournies en tant que spectre radar d'au moins un capteur réalisé sous la forme d'un appareil radar.

**7.** Dispositif de repérage d'un objet (24), lequel est configuré pour traiter des données de capteur (2) en effectuant une fusion probabiliste des données de capteur basée sur une grille, pour déterminer avec les données de capteur (2) des probabilités d'occupation (14, 20) des cellules (42, 60, 74, 84, 86, 88) d'une grille dans l'espace, pour déterminer une région contiguë avec des cellules (42, 60, 74, 84, 86, 88) occupées par le biais d'une segmentation et pour repérer l'objet (24) au moyen de cette région, au moins une partie d'un algorithme conçu pour exécuter un procédé selon l'une des revendications 1 à 8 étant mis en oeuvre dans le dispositif.

8. Programme informatique comprenant des moyens de code de programme pour exécuter toutes les étapes d'un procédé selon l'une des revendications 1 à 6 lorsque le programme informatique est exécuté sur un ordinateur ou sur une unité de calcul correspondante, notamment dans un dispositif selon la revendication 7.

9. Programme informatique comprenant des moyens de code de programme qui sont enregistrés sur un support de données lisible par ordinateur pour exécuter toutes les étapes d'un procédé selon l'une des revendications 1 à 6 lorsque le programme informatique est exécuté sur un ordinateur ou sur une unité de calcul correspondante, notamment dans un dispositif selon la revendication 7.

**Fig. 1**

**Fig. 2**

**Fig. 3**

**Fig. 4a**

**Fig. 4b**

**Fig. 5**

**Fig. 6**

**Fig. 7**

**Fig. 8**

**EP 1 884 795 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5508706 A